# EUROPÄISCHE PATENTSCHRIFT

(11) **EP 3 498 494 B1**
(45) Veröffentlichungstag und Bekanntmachung des Hinweises auf die Patenterteilung: **06.01.2021**
(21) Anmeldenummer: 18199028.4
(22) Anmeldetag: 08.10.2018
(51) Int. Cl.: B60C 5/14, B60C 19/12, B29D 30/06

(54) **FAHRZEUGLUFTREIFEN MIT DICHTMITTELLAGE**
PNEUMATIC TIRE WITH SEALING LAYER
PNEUMATIQUE AVEC UNE COUCHE D'ETANCHEITE

(30) Priorität: 13.12.2017 DE 102017222555
(43) Veröffentlichungstag der Anmeldung: 19.06.2019
(73) Patentinhaber: Continental Reifen Deutschland GmbH, 30165 Hannover (DE)
(72) Erfinder: Doroshenko, Mikheil, 30823 Garbsen (DE); Cai, Xiaoke, 30165 Hannover (DE); Tim Kee, Sherry-Ann, 30167 Hannover (DE); Guardalabene, Joe, 30659 Hannover (DE); Tyburski, Andreas, 31241 Ilsede (DE)
(74) Vertreter: Finger, Karsten

(56) Entgegenhaltungen:
- EP-A1- 1 714 802
- EP-A1- 2 042 296
- EP-A1- 2 335 913
- EP-A1- 2 366 533
- WO-A1-2009/143895
- WO-A1-2011/064698
- DE-A1- 3 034 908
- DE-A1- 3 313 585
- DE-T2- 60 006 601
- JP-A- 2005 001 547
- US-A1- 2004 002 275
- US-A1- 2004 238 090
- US-A1- 2010 294 411
- Anonymous: "Gummiarten und Gummi-Eigenschaften", , 18 February 2015 (2015-02-18), XP055668623, Retrieved from the Internet: URL:https://web.archive.org/web/2015021802 5509/https://www.marotech.de/technische-hi nweise/gummiarten-und-gummi-eigenschaften. html [retrieved on 2020-02-14]
- T Pliakas: "This is a repository copy of Effect of Fibre Type on Mechanical Properties of Nonwoven Reinforced TPU Composites", Proceedings of AUTEX 2016. 16th World Textile Conference AUTEX 2016, 10 June 2016 (2016-06-10), pages 8-10, XP055668775, Retrieved from the Internet: URL:http://eprints.whiterose.ac.uk/99852/1 /Tausif_Muhammad_final_AUTEX16.pdf [retrieved on 2020-02-14]

## Beschreibung

Die Erfindung betrifft einen Fahrzeugluftreifen, der wenigstens eine Dichtmittellage wenigstens auf der dem Laufstreifen gegenüberliegenden Innenfläche aufweist.

Selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.
Das Dichtmittel zeichnet sich durch Luftdichtigkeit, starke Klebrigkeit und ausgewogenes Fließverhalten aus.

Für den Fall, dass der Fremdkörper die Einstichstelle wieder verlässt, könnte das Dichtmittel nach außen aus dem Reifen austreten. Hierdurch könnten ein Druckverlust im Inneren des Reifens und somit ein instabileres Fahrverhalten verursacht werden.

Der vorliegenden Erfindung liegt daher die Aufgabe zugrunde, einen Fahrzeugluftreifen, der wenigstens eine Dichtmittellage wenigstens auf der dem Laufstreifen gegenüberliegenden Innenfläche aufweist (Fahrzeugluftreifen mit Dichtmittellage), bereitzustellen, bei dem im Fall des Einstiches durch einen Fremdkörper (Einstichobjekt) und dessen nachträgliches Entfernen das Dichtmittel vergleichsweise ortsfest verbleibt und nicht (signifikant) aus dem Reifen austritt.

Gelöst wird diese Aufgabe durch einen Fahrzeugluftreifen gemäß Anspruch 1. Durch die wenigstens eine Textillage und durch die genannten unterschiedlichen Eigenschaftsverhältnisse in Bezug auf die Zugfestigkeit und die Bruchdehnung von Dichtmittellage und Textillage werden die Kriechbeständigkeit und die Ortsfestigkeit des Dichtmittels verbessert.

Durch die vergleichsweise hohe Zugfestigkeit der Textillage und die vergleichsweise geringe Bruchdehnung der Textillage wird erzielt, dass das Dichtmittel lokal fixiert ist. Dabei erstreckt sich die Textillage mit in die Einstichstelle und verhindert, dass Dichtmittel aus der Einstichstelle heraus fließt. Das textile Material fungiert dabei als Verstärkung.

Das Dichtmittel fließt im Pannenfall und insbesondere bei Verlust des Einstichobjektes nicht (signifikant) aus dem Reifen heraus. Der erfindungsgemäße Fahrzeugluftreifen weist somit eine verbesserte Luftdichtigkeit und Fahrstabilität auch im Pannenfall auf.

Die Zugfestigkeit und die Bruchdehnung von Textil- und Dichtmittellagen werden im Rahmen der vorliegenden Erfindung gemäß ISO 527 anhand von Stab-Probekörpern des Typs 1A bei einer Testgeschwindigkeit von 5 mm/min bestimmt.

Mit "Textillage" ist im erfindungsgemäßen Kontext eine zusätzliche Lage aus textilem Material zu verstehen: Die in Fahrzeugreifen vorhandenen Gürtel-, Bandagen- und Karkasslagen, welche textile Festigkeitsträger aufweisen können, sind hiermit nicht gemeint.

Unter dem Ausdruck, "radial innerhalb der Dichtmittellage" ist eine Position zu verstehen, die in Richtung des Reifeninneren auf der Dichtmittellage angeordnet ist, wie beispielsweise als radial innerste Schicht des Fahrzeugluftreifens. Diese Position befindet sich auf der radial nach innen gerichteten Oberfläche der Dichtmittellage.
Unter dem Ausdruck "radial außerhalb der Dichtmittellage" ist dagegen eine Position zu verstehen, die in Richtung des Reifenäußeren auf der Dichtmittellage angeordnet ist, wie beispielsweise zwischen der Innenschicht und der Dichtmittellage.
Unter dem Ausdruck "wobei die Textillage mit der Dichtmittellage verbunden ist" ist zu verstehen, dass die Lagen auf jegliche mögliche Art miteinander verbunden sind und insbesondere zueinander benachbart angeordnet sind.

Gemäß einer vorteilhaften und bevorzugten Ausführungsform der Erfindung ist die wenigstens eine Textillage radial innerhalb der Dichtmittellage angeordnet. Hierdurch ist die nach radial innen gerichtete klebrige Oberfläche der Dichtmittellage von der Textillage bedeckt, sodass eine Anhaftung von Fremdkörpern im Inneren des Reifens vermieden wird. Gleichzeitig ist durch diese Anordnung besonders gut sichergestellt, dass das Dichtmittel weiterhin in eine Einstichstelle fließen kann und gleichzeitig eine optimierte Ortsfestigkeit aufweist.

Bevorzugt ist genau eine Textillage radial innerhalb der Dichtmittellage angeordnet. Dies bedeutet, dass bevorzugt keine weitere Textillage in unmittelbarer Nachbarschaft zu der Dichtmittellage angeordnet ist, also insbesondere keine zusätzliche Textillage zwischen Innenschicht und Dichtmittellage angeordnet ist.

Gemäß einer bevorzugten Ausführungsform der Erfindung weist der Fahrzeugluftreifen dabei genau eine Dichtmittellage auf.

Die Textillage weist bevorzugt eine Zugfestigkeit gemäß ISO 527 von 20 bis 600 MPa aufweist. Besonders bevorzugt weist die Textillage eine Zugfestigkeit gemäß ISO 527 von 20 bis 300 MPa, ganz besonders bevorzugt von 20 bis 250 MPa auf.

Gemäß einer bevorzugten Ausführungsform der Erfindung weist die Textillage eine Zugfestigkeit gemäß ISO 527 von 20 bis 100 MPa, besonders bevorzugt 20 bis 60 MPa, auf.
Mit einer Zugfestigkeit von 20 bis 600 MPa bzw. in den besonders bevorzugten Bereichen ist die Textillage besonders gut geeignet, um das Dichtmittel lokal zu fixieren und sich gleichzeitig selbst partiell in die Einstichstelle zu bewegen.

Die Textillage weist bevorzugt eine Bruchdehnung gemäß ISO 527 von 1,1 bis 400 % auf. Besonders bevorzugt weist die Textillage eine Bruchdehnung gemäß ISO 527 von 15 bis 200 %, ganz besonders bevorzugt 50 bis 200 %, wiederum bevorzugt 55 bis 150 %, und wiederum besonders bevorzugt 60 bis 150 %, auf.
Hierdurch wird wie oben beschrieben das Dichtmittel lokal fixiert und das Fließverhalten optimiert, insbesondere wird ein Fließen des Dichtmittels aus der Einstichstelle verhindert.

Als Material der Textillage ist prinzipiell jedes textile Material geeignet, welches ein Netzwerk aus natürlichen und/oder synthetischen Fasern ausbilden kann.
Bevorzugt umfasst die Textillage wenigstens ein textiles Material, welches ausgewählt ist aus der Gruppe bestehend aus
a) Polyamiden (PA) wie Nylon,
b) Polyestern wie Polybutylenterephthalat (PBT) und Polyethylenterephthalat (PET),
c) Polyketonen wie Polyetheretherketon (PEEK),
d) Polyarylat,
e) Polycarbonat (PC),
f) Carbonfasern,
g) Polyether wie Polyphenylenether (PPE, früher Polyphenylenoxid),
h) Cellulose,
i) Cellulose-Derivate wie Celluloseacetat (CA) und Cellulosepropionat,
j) Regeneratcellulose,
k) Rayon,
l) Aramide wie m-Aramid, p-Aramid und Gemische aus m-Aramid und p-Aramid,
m) Polyoxymethylen und
n) Fluorpolymeren, wie Ethylen-Tetrafluorethylen-Copolymer (ETFE) und Ethylen-Chortrifluorethylen (ECTFE) und
o) Polyolefine, wie Polypropylen (PP) und Polyethylen (PE).

Hierbei ist auch eine Kombination von zwei oder mehreren sämtlicher genannter textilen Materialien umfasst.

Die Textillage ist beispielsweise aus Fasern der textilen Materialien aufgebaut, die wiederum bevorzugt zu Garnen verdreht sind. Hierbei können auch Fasern unterschiedlicher Materialien miteinander verdreht sein.

Gemäß vorteilhafter Ausführungsformen können die Garne auch zu Corden verdreht sein. Hierbei können auch Garne unterschiedlicher Corde miteinander verdreht sein.

Die Textillage ist erfindungsgemäß ein Gewebe aus Fasern und/oder Garnen und/oder Corden.

Die Dichtmittellage umfasst wenigstens ein Dichtmittel. Hierbei ist prinzipiell jedes Dichtmittel umfasst, das insbesondere aufgrund der Zusammensetzung und des Fließverhaltens eine Lage innerhalb eines Fahrzeugluftreifens ausbilden kann und im Pannenfall selbstabdichtend wirkt.

Bevorzugt basiert das Dichtmittel auf der Vernetzung eines Kautschuks und/oder Polyolefins.

Bei dem Kautschuk kann es sich um alle dem Fachmann bekannten Kautschuktypen handeln. Es ist auch ein Gemisch verschiedener Kautschuke denkbar.

Gemäß einer bevorzugten Ausführungsform der Erfindung handelt es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR).

Diese Kautschuktypen sind für die Verarbeitungstemperaturen bei der Herstellung des Reifendichtmittels und später bei der Anwendung im Reifen besonders gut geeignet.

Besonders bevorzugt wird wenigstens Butylkautschuk (IIR) verwendet. Butylkautschuk eignet sich besonders gut, da er eine vergleichsweise hohe Luftdichtigkeit aufweist.

Das wenigstens eine Polyolefin weist bevorzugt ein Zahlenmittel der Molekulargewichtsverteilung Mn gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.
Ein Polyolefin mit den genannten Bereichen für das Mn ist besonders geeignet, um die gewünschte Fließfähigkeit bei gleichzeitiger Abdichtwirkung des Dichtmittels im Pannenfall zu erzeugen.
Hierbei ist es besonders bevorzugt, dass das wenigstens eine Polyolefin wenigstens ein Polybuten ist.
Dieses stellt die Klebrigkeit des fertigen Dichtmittels ein und bestimmt die Fließfähigkeit im Produktionsprozess sowie die lokale Ortsfestigkeit des fertigen Dichtmittels.
Es kann sich auch um ein Gemisch zweier oder mehrerer Polybutene mit jeweils einem Mn von 400 bis 2500 g/mol handeln, wobei sich die Polybutene im Mn unterscheiden können. Geeignete Polybutene, auch Polyisobutene genannt, sind beispielsweise unter den Handelsnamen Indopol® Polybutene der Firma INEOS Capital Limited erhältlich.
Es ist auch ein Gemisch wenigstens eines Polybutens mit wenigstens einem weiteren Polyolefin denkbar.

Dem Fachmann ist klar, dass die genannten Bestandteile im vernetzten Dichtmittel zumindest teilweise in chemisch veränderter Form, insbesondere als Derivate, vorliegen.

Bevorzugt basiert das Dichtmittel auf der Vernetzung durch wenigstens einen Vernetzer, der ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Bevorzugt basiert das Dichtmittel auf der Vernetzung durch wenigstens einen Vernetzer in Kombination mit einem Vernetzungsinitiator, wobei der Vernetzungsinitiator bevorzugt ausgewählt aus der Gruppe enthaltend Bleioxid und andere Metalloxide und peroxidische Verbindungen. Der Vernetzungsinitiator ist eine chemische Verbindung, welche die Vernetzung des Dichtmittels initiiert.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, sodass in den angegebenen Mengen des wenigstens einen Vernetzungsinitiators Begleitsubstanzen wie Dibutylmaleat nicht eingerechnet sind.

Das Dichtmittel kann ferner weitere Bestandteile enthalten, wie insbesondere Füllstoff(e), Klebrigmacher, Weichmacher, wie z. B. Öl(e), sowie gegebenenfalls weitere Zusatzstoffe, wie z. B. Farbpigmente und/oder Zinkoxid und/oder Schwefel.

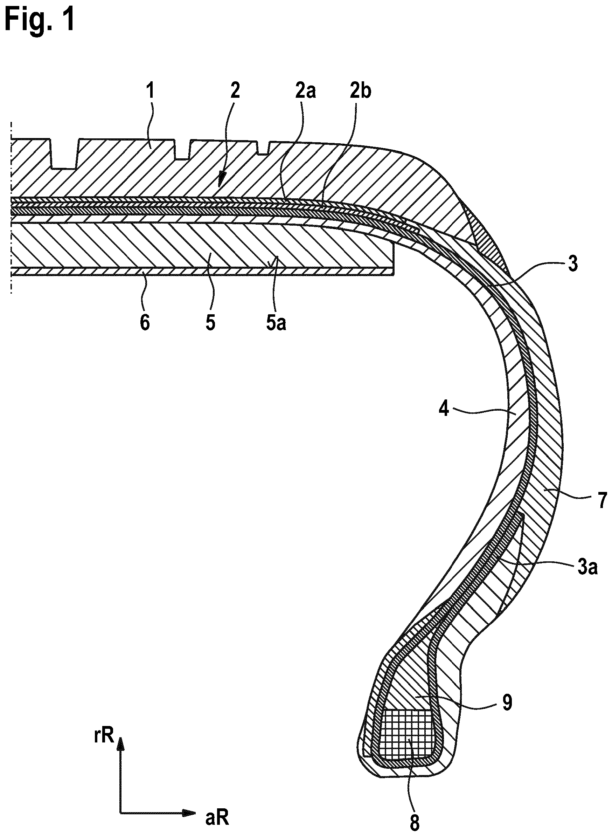

Weitere Einzelheiten der Erfindung werden anhand der Figur 1, die ein schematisches Ausführungsbeispiel darstellt, näher erläutert.

Die wesentlichen Bestandteile, aus welchen sich der erfindungsgemäße Fahrzeugluftreifen zusammensetzt, sind ein profilierter Laufstreifen 1, ein bei der gezeigten Ausführung aus zwei Lagen 2a, 2b bestehendes Gürtelpaket 2, eine einlagige Karkasse 3, welche um die Wulstkerne 8 und Wulstkernprofile 9 von axial innen nach axial außen herumgeführt ist und im Karkasshochschlag 3a endet, sowie Seitenwände 7. Die beiden Lagen 2a, 2b des Gürtelpakets 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2b orientiert sind und mit der Reifenumfangsrichtung jeweils einen Winkel zwischen 15° und 45° einschließen. Auch die einlagige Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Selbstdichtung des Fahrzeugluftreifens ist durch eine nach der Vulkanisation des Fahrzeugluftreifens nachträglich radial innen umlaufend aufgebrachte Dichtmittellage 5 erhalten. Die Dichtmittellage 5 weist im Wesentlichen die Breite des Gürtelpakets 2 auf und ist im Wesentlichen in dessen Projektion angeordnet und weist einen in der die Reifenachse beinhaltenden Querschnittsebene ausgebildeten Querschnitt mit einer radial nach innen gerichteten in axialer Richtung, im Wesentlichen parallel zum Gürtelpaket, verlaufende Oberfläche 5a auf.

Gemäß des Beispiels in Figur 1 ist radial innerhalb der Dichtmittellage 5, also auf der radial nach innen gerichteten Oberfläche 5a der Dichtmittellage 5, eine Textillage 6 angeordnet. Hierdurch wird eine Anhaftung von Fremdkörpern an die radial nach innen gerichteten Oberfläche 5a der Dichtmittellage 5 vermieden.

Gleichzeitig fixiert die Textillage 6 das Dichtmittel lokal, sodass nach einem Pannenfall im Fall des Verlustes des Einstichobjektes, kein oder so gut wie kein Dichtmittel aus dem Reifen ausfließt.

Beispielsweise können die Gewebe unter den Handelsnamen SEFAR NITEX® (PA), SEFAR PETEX® (PET), SEFAR® PROPYLTEX (PP), SEFAR® FLUORTEX (ETFE, ECTFE) oder SEFAR® PEEKTEX als Textillage 6 verwendet werden.

### Bezugszeichenliste

### (Teil der Beschreibung)

1 Laufstreifen
2 Gürtelpaket
2a Gürtellage
2b Gürtellage
3 Karkasse
3a Karkasshochschlag
4 Innenschicht
5 Dichtmittellage
5a radial nach innen gerichtete in axialer Richtung, im Wesentlichen parallel zum Gürtelpaket, verlaufende Oberfläche der Dichtmittellage
6 Textillage
7 Seitenwand
8 Wulstkern
9 Wulstkernprofil

rR radiale Richtung
aR axiale Richtung

## Patentansprüche

1. Fahrzeugluftreifen, der wenigstens eine Dichtmittellage (5) wenigstens auf der dem Laufstreifen (1) gegenüberliegenden Innenfläche aufweist, wobei radial innerhalb und/oder radial außerhalb der Dichtmittellage (5) wenigstens eine Textillage (6) angeordnet ist, wobei die Textillage (6) mit der Dichtmittellage (5) verbunden ist, **dadurch gekennzeichnet, dass** die
Zugfestigkeit gemäß ISO 527 der Textillage (6) größer ist als die Zugfestigkeit der Dichtmittellage (5) und gleichzeitig die Bruchdehnung gemäß ISO 527 der Dichtmittellage (5) größer ist als die Bruchdehnung der Textillage (6), und wobei die Textillage (6) ein Gewebe aus Fasern und/oder Garnen und/oder Corden ist, und wobei die Textillage (6) eine zusätzliche Lage ist, die nicht als Gürtel-, Bandagen- oder Karkasslage der Fahrzeugluftreifens ausgebildet ist.

2. Fahrzeugluftreifen nach Anspruch 1, **dadurch gekennzeichnet, dass** die wenigstens eine Textillage (6) radial innerhalb der Dichtmittellage (5) angeordnet ist.

3. Fahrzeugluftreifen nach Anspruch 2, **dadurch gekennzeichnet, dass** genau eine Textillage (6) radial innerhalb der Dichtmittellage (5) angeordnet ist.

4. Fahrzeugluftreifen nach einem der vorherigen Ansprüche, **dadurch gekennzeichnet, dass** der Fahrzeugluftreifen genau eine Dichtmittellage (5) aufweist.

5. Fahrzeugluftreifen nach einem der vorherigen Ansprüche, **dadurch gekennzeichnet, dass** die Textillage (6) eine Zugfestigkeit gemäß ISO 527 von 20 bis 600 MPa aufweist.

6. Fahrzeugluftreifen nach Anspruch 5, **dadurch gekennzeichnet, dass** die Textillage (6) eine Zugfestigkeit gemäß ISO 527 von 20 bis 250 MPa, bevorzugt 20 bis 100 MPa, aufweist.

7. Fahrzeugluftreifen nach einem der vorherigen Ansprüche, **dadurch gekennzeichnet, dass** die Textillage (6) eine Bruchdehnung gemäß ISO 527 von 1,1 bis 400 % aufweist.

8. Fahrzeugluftreifen nach Anspruch 7, **dadurch gekennzeichnet, dass** die Textillage (6) eine Bruchdehnung gemäß ISO 527 von 15 bis 200 % aufweist.

9. Fahrzeugluftreifen nach einem der vorherigen Ansprüche, **dadurch gekennzeichnet, dass** die Textillage (6) wenigstens ein textiles Material umfasst, welches ausgewählt ist aus der Gruppe bestehend aus a) Polyamiden (PA) wie Nylon, b) Polyestern wie Polybutylenterephthalat (PBT) und Polyethylenterephthalat (PET), c) Polyketonen wie Polyetheretherketon (PEEK), d) Polyarylat, e) Polycarbonat (PC), f) Carbonfasern, g) Polyether wie Polyphenylenether (PPE), h) Cellulose, i) Cellulose-Derivate wie Celluloseacetat (CA) und Cellulosepropionat, j) Regeneratcellulose, k) Rayon, l) Aramide wie m-Aramid, p-Aramid und Gemische aus m-Aramid und p-Aramid, m) Polyoxymethylen, n) Fluorpolymeren, wie Ethylen-Tetrafluorethylen-Copolymer (ETFE) und Ethylen-Chortrifluorethylen (ECTFE), und o) Polyolefine, wie Polypropylen (PP) und Polyethylen (PE).

10. Fahrzeugluftreifen nach einem der vorherigen Ansprüche, **dadurch gekennzeichnet, dass** die Dichtmittellage (5) ein Dichtmittel umfasst, welches auf der Vernetzung eines Kautschuks und/oder Polyolefins basiert.

## Claims

1. Pneumatic vehicle tyre comprising at least one sealant ply (5) at least on the inner surface opposite the tread (1), wherein arranged radially inward of and/or radially outward of the sealant ply (5) is at least one textile ply (6), wherein the textile ply (6) is joined to the sealant ply (5), **characterized in that** the tensile strength according to ISO 527 of the textile ply (6) is greater than the tensile strength of the sealant ply (5) and simultaneously the breaking elongation according to ISO 527 of the sealant ply (5) is greater than the breaking elongation of the textile ply (6) and wherein the textile ply (6) is a fabric made of fibres and/or yarns and/or cords
and
wherein the textile ply (6) is an additional ply which is not configured as the belt, bandage or carcass ply of the pneumatic vehicle tyre.

2. Pneumatic vehicle tyre according to Claim 1, **characterized in that** the at least one textile ply (6) is arranged radially inward of the sealant ply (5).

3. Pneumatic vehicle tyre according to Claim 2, **characterized in that** precisely one textile ply (6) is arranged radially inward of the sealant ply (5).

4. Pneumatic vehicle tyre according to any of the preceding claims, **characterized in that** the pneumatic vehicle tyre has precisely one sealant ply (5).

5. Pneumatic vehicle tyre according to any of the preceding claims, **characterized in that** the textile ply (6) has a tensile strength according to ISO 527 of 20 to 600 MPa.

6. Pneumatic vehicle tyre according to Claim 5, **characterized in that** the textile ply (6) has a tensile strength according to ISO 527 of 20 to 250 MPa, preferably 20 to 100 MPa.

7. Pneumatic vehicle tyre according to any of the preceding claims, **characterized in that** the textile ply (6) has a breaking elongation according to ISO 527 of 1.1% to 400%.

8. Pneumatic vehicle tyre according to Claim 7, **characterized in that** the textile ply (6) has a breaking elongation according to ISO 527 of 15% to 200%.

9. Pneumatic vehicle tyre according to any of the preceding claims, **characterized in that** the textile ply (6) comprises at least one textile material selected from the group consisting of a) polyamides (PA) such as nylon, b) polyesters such as polybutylene terephthalate (PBT) and polyethylene terephthalate (PET), c) polyketones such as polyether ether ketone (PEEK), d) polyarylate, e) polycarbonate (PC), f) carbon fibres, g) polyethers such as polyphenylene ether (PPE), h) cellulose, i) cellulose derivatives such as cellulose acetate (CA) and cellulose propionate, j) regenerated cellulose, k) rayon, 1) aramids such as m-aramid, p-aramid and mixtures of m-aramid and p-aramid, m) polyoxymethylene, n) fluoropolymers, such as ethylene-tetrafluoroethylene copolymer (ETFE) and ethylene-chlorotrifluoroethylene (ECTFE) and o) polyolefins, such as polypropylene (PP) and polyethylene (PE).

10. Pneumatic vehicle tyre according to any of the preceding claims, **characterized in that** the sealant ply (5) comprises a sealant based on the crosslinking of a rubber and/or polyolefin.

## Revendications

1. Pneu de véhicule, qui comprend au moins une couche d'étanchéité (5) au moins sur la surface intérieure opposée à la bande de roulement (1), au moins une couche textile (6) étant agencée radialement à l'intérieur et/ou radialement à l'extérieur de la couche d'étanchéité (5), la couche textile (6) étant reliée avec la couche d'étanchéité (5), **caractérisé en ce que** la résistance à la traction selon ISO 527 de la couche textile (6) est supérieure à la résistance à la traction de la couche d'étanchéité (5) et, simultanément, l'allongement à la rupture selon ISO 527 de la couche d'étanchéité (5) est supérieur à l'allongement à la rupture de la couche textile (6), et dans lequel la couche textile (6) est un tissu de fibres et/ou de fils et/ou de câbles, et
dans lequel la couche textile (6) est une couche supplémentaire, qui n'est pas configurée sous la forme d'une couche de ceinture, de bandage ou de carcasse du pneu de véhicule.

2. Pneu de véhicule selon la revendication 1, **caractérisé en ce que** ladite au moins une couche textile (6) est agencée radialement à l'intérieur de la couche d'étanchéité (5).

3. Pneu de véhicule selon la revendication 2, **caractérisé en ce qu'**exactement une couche textile (6) est agencée radialement à l'intérieur de la couche d'étanchéité (5).

4. Pneu de véhicule selon l'une quelconque des revendications précédentes, **caractérisé en ce que** le pneu de véhicule comprend exactement une couche d'étanchéité (5).

5. Pneu de véhicule selon l'une quelconque des revendications précédentes, **caractérisé en ce que** la couche textile (6) présente une résistance à la traction selon ISO 527 de 20 à 600 MPa.

6. Pneu de véhicule selon la revendication 5, **caractérisé en ce que** la couche textile (6) présente une résistance à la traction selon ISO 527 de 20 à 250 MPa, de préférence de 20 à 100 MPa.

7. Pneu de véhicule selon l'une quelconque des revendications précédentes, **caractérisé en ce que** la couche textile (6) présente un allongement à la rupture selon ISO 527 de 1,1 à 400 %.

8. Pneu de véhicule selon la revendication 7, **caractérisé en ce que** la couche textile (6) présente un allongement à la rupture selon ISO 527 de 15 à 200 %.

9. Pneu de véhicule selon l'une quelconque des revendications précédentes, **caractérisé en ce que** la couche textile (6) comprend au moins un matériau textile, qui est choisi dans le groupe constitué par a) les polyamides (PA) tels que le nylon, b) les polyesters tels que le polytéréphtalate de butylène (PBT) et le polytéréphtalate d'éthylène (PET), c) les polycétones telles que la polyéther-éther-cétone (PEEK), d) le polyarylate, e) le polycarbonate (PC), f), les fibres de carbone, g) les polyéthers tels que le polyéther de phénylène (PPE), h) la cellulose, i) les dérivés de cellulose tels que l'acétate de cellulose (CA) et le propionate de cellulose, j) la cellulose régénérée, k) la rayonne, 1), les aramides tels que le m-aramide, le p-aramide et les mélanges de m-aramide et de p-aramide, m) le polyoxyméthylène, n) les polymères fluorés, tels que le copolymère d'éthylène-tétrafluoroéthylène (ETFE) et l'éthylène-chlorotrifluoroéthylène (ECTFE), et o) les polyoléfines, telles que le polypropylène (PP) et le polyéthylène (PE).

10. Pneu de véhicule selon l'une quelconque des revendications précédentes, **caractérisé en ce que** la couche d'étanchéité (5) comprend un agent d'étanchéité, qui est à base de la réticulation d'un caoutchouc et/ou d'une polyoléfine.
